# EUROPEAN PATENT APPLICATION

(11) **EP 4 206 833 A1**
(43) Date of publication of application: **05.07.2023**
(21) Application number: 22306992.3
(22) Date of filing: 22.12.2022
(51) Int. Cl.: G05B 15/02

(54) **SENSING NODE, SENSING NETWORK, INTELLIGENT BUILDING CONTROL SYSTEM AND ASSOCIATED METHOD**

(30) Priority: 31.12.2021 CN 202111664772
(71) Applicant: SCHNEIDER ELECTRIC INDUSTRIES SAS, 92500 Rueil-Malmaison (FR)
(72) Inventor: FAN, Zhongxiao, Shenzhen, 518000 (CN); FABER, Arseni, 51674 Wiehl (DE)
(74) Representative: Manitz Finsterwald Patent- und Rechtsanwaltspartnerschaft mbB

(57) **Abstract**

Embodiments of the present disclosure relate to a sensing node, a sensing network, an intelligent building control system and an associated method. The sensing node includes: a housing adapted to be installed on a carrier of a building space; an object detection means received in the housing and configured to provide object detection data of objects in a sensing area; and a position determining means received in the housing and configured to provide positioning data of the sensing node in the building space; wherein the object detection data are adapted to be fused with the positioning data to provide characterized data, the characterized data providing a characterization of the object detection data in the building space. According to the present disclosure, the collaborative interactions among the sensing node, the electrical apparatuses and the building space can be enhanced, with improved the intelligent level of the intelligent building control system.

## Description

### FIELD

Embodiments of the present disclosure generally relate to the field of intelligent building control systems, and more specifically, to a sensing node, a sensing network, an intelligent building control system and an associated method.

### BACKGROUND

With the development of the information technology, constructions such as buildings, sports halls, and the like are becoming more intelligent than ever before. Crucial points of an intelligent building lie in intelligence control of electrical apparatuses within the buildings. Nevertheless, the conventional electrical apparatuses are mainly controlled based on a device-to-device control strategy. In the system, a plurality of sensors is provided in a building and controllers for controlling electrical apparatuses are connected with the sensors in a building. The sensors are configured to collect event-related signals. When the sensors collect a trigger event, the controller corresponding to the sensors sends action instructions to cause the electrical apparatuses to perform respective control operations. Although such electrical apparatus system can satisfy certain intelligent demands, it is still desired to further increase the intelligent level of the building system to enhance the collaborative interaction between the sensors and the electrical apparatuses.

### SUMMARY

According to example embodiments of the present disclosure, there are provided a sensing node, a sensing network, an intelligent building control system and an associated method.

In a first aspect of the present disclosure, there is provided a sensing node. The sensing node comprises: a housing adapted to be installed on a carrier of a building space; an object detection means received in the housing and configured to provide object detection data of objects in a sensing area; and a position determining means received in the housing and configured to provide positioning data of the sensing node in the building space; wherein the object detection data are adapted to be fused with the positioning data to provide characterized data, the characterized data providing a characterization of the object detection data in the building space.

In a second aspect of the present disclosure, there is provided a sensing network. The sensing network comprises: at least one the sensing node of the first aspect, each sensing node in the plurality of sensing nodes being installed at a respective location of a building space and adapted to sense object detection data in a respective sensing area of the building space; and a fusion node communicatively connected to each sensing node in the plurality of sensing nodes to acquire the respective object detection data, and configured to characterize, based on a location of each sensing node, the respective object detection data in the building space.

In a third aspect of the present disclosure, there is provided a control node. The control node comprises: a receiving means configured to receive object detection data characterized in a building space from a sensing network, wherein the object detection data characterized in the building space is acquired by fusing object detection data from a sensing node of the sensing network and positioning data of the sensing node; a spatial state feature generation means configured to generate, based on the object detection data characterized in the building space, spatial state features of the building space associated with objects; and an electrical apparatus selection means configured to select, based on the spatial state features of the building space, electrical apparatuses for control associated with activities of an object from a plurality of electrical apparatuses.

In a fourth aspect of the present disclosure, there is provided a method of controlling electrical apparatuses. The method comprises: acquiring object detection data from a respective sensing area of a plurality of sensing nodes, wherein the sensing nodes are the sensing nodes of the first aspect; acquiring positioning data of each of the plurality of sensing nodes in the building; and fusing the object detection data and the positioning data to characterize the object detection data in the building space, to provide, based on the object detection data characterized in the building space, information related to the electrical apparatuses.

In a fifth aspect of the present disclosure, there is provided an electronic apparatus. The electronic apparatus comprises: one or more processors; and a memory device for storing one or more programs, where the one or more programs, when executed by the one or more processors, cause the one or more processors to implement the method of the fourth aspect.

In a sixth aspect of the present disclosure, there is provided an intelligent building control system. The intelligent building control system comprises: the sensing network of the second aspect; and the electrical apparatuses of the fifth aspect.

In a seventh aspect of the present disclosure, there is provided an intelligent building control system. The intelligent building control system comprises: the sensing network of the second aspect; and the control node of the third aspect.

In an eighth aspect of the present disclosure, there is provided a non-transient computer readable storage medium having computer instructions stored, where the computer instructions cause a computer to perform the method of the fourth aspect.

The sensing node, the sensing network, the intelligent building control system and the associated method according to embodiments of the present disclosure can promote the collaborative interaction among the sensing node, the electrical apparatus and the building space and further improve the intelligence level of the intelligent building control system.

It would be appreciated that this Summary is not intended to identify key features or essential features of embodiments of the present disclosure, nor is it intended to be used to limit the scope of the present disclosure. Other features of the present disclosure will become evident through the following description.

### BRIEF DESCRIPTION OF THE DRAWINGS

The above and other objectives, features and advantages of the present disclosure will become more apparent, through the following detailed description with reference to the accompanying drawings. Throughout the drawings, the same or similar reference symbols refer to the same or similar components, where:
Fig. 1 illustrates a schematic diagram of an example environment where multiple embodiments of the present disclosure can be implemented;
Fig. 2 illustrates a schematic block diagram of a network for an intelligent building control system according to some embodiments of the present disclosure;
Fig. 3 illustrates a schematic structural block diagram of a sensing node according to some embodiments of the present disclosure;
Fig. 4 illustrates a schematic structural block diagram of a fusion node according to some embodiments of the present disclosure;
Fig. 5 illustrates a schematic structural block diagram of a control node according to some embodiments of the present disclosure;
Fig. 6 illustrates a flowchart of a method of controlling electrical apparatuses according to some embodiments;
Fig. 7 illustrates a flowchart of a method of controlling electrical apparatuses according to some embodiments of the present disclosure;
Fig. 8 illustrates a block diagram of a device that can implement multiple embodiments of the present disclosure.

### DETAILED DESCRIPTION OF EMBODIMENTS

Reference will now be made to drawings to describe embodiments of the present disclosure in more detail. Although the drawings depict some embodiments of the present disclosure, it would be appreciated that the present disclosure could be implemented in various forms, which should not be construed as being limited to the embodiments illustrated herein. Rather, those embodiments are provided to make the present disclosure more thoroughly and completely. It is to be understood that the drawings and embodiments of the present disclosure are merely provided as examples, without suggesting any limitation to the protection scope of the present disclosure.

In the description on the embodiments of the present disclosure, the term "includes" and its variants are to be read as open terms that mean "includes, but is not limited to." The term "based on" is to be read as "based at least in part on." The term "an embodiment" or "the embodiment" is to be read as "at least one embodiment." The terms "first," "second," and the like may refer to different objects or the same object. Other meanings explicit or implicit may be covered below.

As aforementioned, a conventional intelligent building system is based on a sensor-electrical apparatus control method. In the conventional control system, a signal collected by the sensor is directly applied to or triggers control of the electrical apparatuses within the sensing area. The building is typically provided with a plurality of the sensors to implement control of a plurality of electrical apparatuses. Although the system can accomplish control of electrical apparatuses, their intelligent level is far from satisfying the requirements. It is desired to further increase the intelligent level of the electrical apparatuses.

To this end, the inventors of the present disclosure propose a control conception based on sensors network-building space. In the control method according to embodiments of the present disclosure, control of electrical apparatuses is not directly caused by a signal from a sensor. Rather, a plurality of sensors are interconnected to achieve regional coverage of a building space, and data fusion is performed for the sensing area of each sensor and a world coordinate of the building space such that a higher level of intelligent control of electrical apparatuses can be accomplished based on a space of interest related to the object in the building. Compared with the conventional sensor-electrical apparatus based control method, the control method according to the present disclosure can achieve intelligent control of electrical apparatuses based on a space of interest related to objects in the whole building, and can break through the limitations in the conventional technology that control of electrical apparatuses has to be dependent on trigger of a physical object. The intelligent building system has distinct advantages in terms of user friendliness, energy-saving, comfort, safety and the like. Hereinafter, reference will be made to drawings to describe embodiments of the present disclosure in more detail.

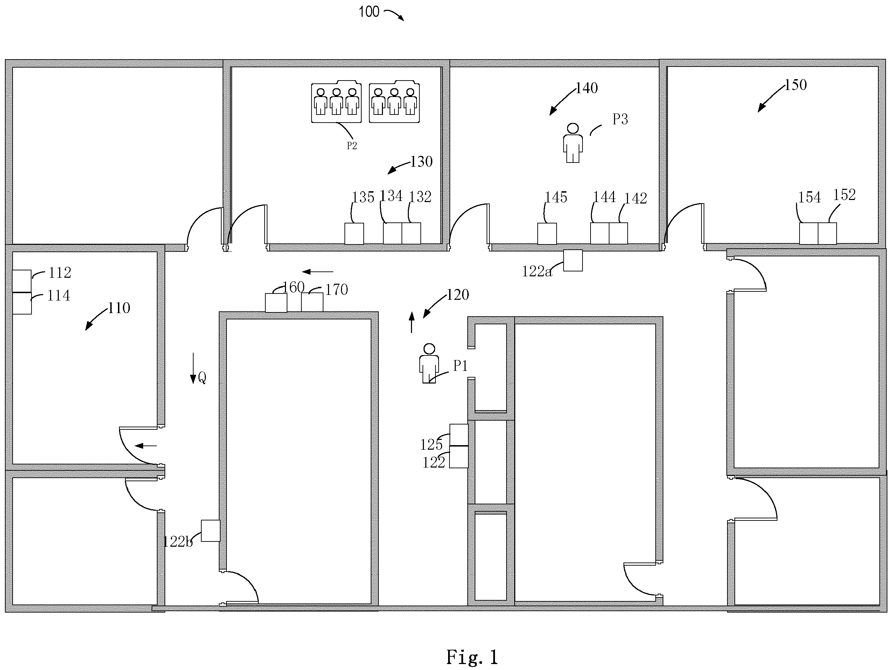

Fig. 1 illustrates a schematic diagram of an example building environment 100 where multiple embodiments of the present disclosure can be implemented. The example environment 100 has a spatial layout including space areas 110, 120, 130, 140 and 150. The spatial layout can provide different areas for user's activities. For illustration, in the embodiments depicted, one floor in the building space is taken as an example to describe the implementation principle of the embodiments of the present disclosure. It is to be understood that the building space may include a plurality of floors or buildings. Besides, as required, sensing nodes can be arranged based on the spatial layout of the floor in a building or a group of buildings. In addition, although an inside of a building is taken as an example for description in the depicted embodiments, it is only exemplary, and the invention conception according to the embodiments of the present disclosure can be applied likewise to outdoor facilities, for example, when electrical apparatuses are arranged to outdoor playgrounds, outdoor plazas and the like.

In a spatial layout may be arranged one or more electrical apparatuses. In the embodiments as depicted, reference signs 110, 120, 130, 140 and 150 denote a plurality of different space areas. The space areas 110, 130, 140 and 150 are shown as areas of use in the building, and the space area 120 is shown as a corridor area of the building. The example environment 100 further includes electrical apparatuses arranged in different space areas. For example, in the space area 110 is arranged a lighting apparatus 112 and a heating, ventilation and air conditioning apparatus (HVAC) 114; in the space area 120 is arranged a lighting apparatus 122; in the space area 130 is arranged a lighting apparatus 132 and a HVAC 134; in the space area 140 is arranged a lighting apparatus 142 and a HVAC 144; in the space area 150 is arranged a lighting apparatus 152 and a HVAC 154. The light devices 112, 122, 132, 142 and 152, for example, are configured to provide illumination for the respective space areas. The HVACs 114, 134, 144 and 154 are configured to provide air and/or temperature regulation for the respective space areas. It is worth nothing that, for ease of description, although the HVACs and lighting apparatuses in a building are used as an example of the application scenario in the embodiments of the present disclosure, this is only exemplary, and the sensing network according to embodiments of the present disclosure can be applied to other electrical apparatuses that needs to be triggered by an object to operate, such as a security device and the like.

The example environment 100 may further include a plurality of sensing nodes 125, 135 and 145 installed at different locations of a building. The sensing node can be used to sense an object P that enters a building area, where the object may include in particular a person or any other moving object. In the embodiments of the present disclosure, a person is used as an example for illustration, and it would be appreciated that this is only exemplary; other objects of interest such as an animal, a moving object and the like can be applied in the sensing network according to embodiments of the present disclosure. In the embodiments as depicted, the sensing node 125 is arranged in the space area 120, the sensing node 135 is arranged in the space area 130, and the sensing node 145 is arranged in the space area 140. In the embodiments as depicted, for ease of description, the spatial layout of the floor as shown is provided only with three sensing nodes 125, 135 and 145; this is only exemplary, and the sensing nodes 125, 135 and 145 can be arranged in appropriate areas and different floors in a building space so as to cover important areas of the entire building. For example, the sensing nodes can be arranged at the entrance of the building, an important room or other areas needing to be sensed. Considering the costs of the sensing nodes 125, 135 and 145, a balance could be sought between the number of sensing nodes 125, 135 and 145 and the area sensing demand in a building.

The term "sensing node" as used herein is to be read as a device at least having a communication capability and especially suited for being installed a building, for example, on a wall of a building. The sensing node can include a sensing node that provides detection of a sensing area. In some embodiments, the sensing node can detect whether an object enters the sensing area. Depending on different hardware, the sensing nodes can provide different sensing performances, for example, sensing performances differing in granularity. The term "granularity," for example, may be used relative to "sensing accuracy". For instance, the sensing node can provide sensing accuracy degrees on different levels, for example, presence of objects, a number of objects, a posture of an object, minute movement of an object and the like. In some embodiments, the sensing node is adapted to provide a positioning location where the sensing node is installed. By means of the positioning location, conversion of a sub-coordinate of the sensing area into a world coordinate of the building space can be implemented, to characterize or map the object sensing condition in the building space.

The example environment 110 may further include a fusion node 160 and a control node 170. The fusion node 160 can be arranged at an appropriate location in the building and is communicatively connected with the one or more sensing nodes 125, 135 and 145. The fusion node 160 is configured to perform data fusion for the data from the sensing nodes 125, 135 and 145 and coordinates of the building. Through the data fusion, the respective object detection data from the sensing nodes can be characterized in the building space. The fusion node 160 is communicatively connected to the sensing nodes 125, 135 and 145 in a wired or wireless manner. In the case of a wireless connection, an appropriate wireless communication protocol can be selected based on the distance between the fusion node 160 and the sensing nodes 125, 135 and 145. It is to be understood that, in the embodiments as depicted, only a fusion node 160 is shown, which is provided as an example for description; in the sensing network according to embodiments of the present disclosure, a plurality of fusion nodes 160 can be arranged based on a number of sensing nodes and arrangement locations thereof. The fusion node 160 can be arranged in an appropriate area in the building space to fulfil the communicative connection with a part or all of the sensing nodes in the whole building. In this way, with the fusion node, the present disclosure can implement effective tracing of objects within all spaces of interest in the whole building.

In addition, the control node 170 can be communicatively connected to the fusion node 160 and can be configured to provide instructions for electrical apparatus control. The control node 170 can be associated with one or more electrical apparatuses in the building space, and can adopt respective control policies for the electrical apparatuses based on the data from the fusion node 160. Those control policies may cover various contents, for example, including: user needs, energy-saving, safety and the like.

In the embodiments as depicted, a control node 170 is arranged in the spatial layout of the floor depicted. For example, the lighting apparatuses 112, 122, 132, 142 and 152 and the HVACs 114, 134, 144 and 154 can be controlled via the control node 170. It would be appreciated that this is provided only as an example, and the number of the control nodes 170 may be plural. In some embodiments, the control node 170 can communicate with the controller of the electrical apparatuses to send a control instruction.

It is to be understood that, although the control node and/or fusion node are arranged locally in the building in the embodiments as depicted, this is provided only as an example, and in other embodiments, the control node and/or fusion node can be arranged outside the physical space of the building, for example, arranged remotely. In addition, the sensing nodes, the control node and/or the fusion node within the sensing network can communicate in any appropriate manner, for example, a short-range, a long-range and/or a wireless or wired manner.

Moreover, it is to be understood that in the shown embodiments, the control node can communicate with the electrical apparatuses to send a control instruction, this is provided only as an example. In some embodiments, the control node may not be used to directly control the electrical apparatus, but can provide information related to the electrical apparatuses to a control device for control based on the information. For example, the control node can send the related information to a user or a control center of the electrical apparatuses, and the user or the control center of the electrical apparatuses then can take corresponding control measures as required.

As used herein, the terms "fusion node" and "control node" are to be read as an electrical apparatus at least having a communication capability and a computing capability, respectively. The fusion node is adapted to process data from the sensing node to provide a characterization of the data in the building space; the control node is adapted to generate, based on the characterized data, an instruction for controlling electrical apparatuses and provide the same to the electrical apparatuses. It is to be understood that the fusion node 160 and the control node 170 are shown as separate devices in the embodiments as depicted, the function of the fusion node 160 can be implemented in a sensing node in some embodiments. In particular, a sensing node having an performance in data processing and computing capability can perform the function of the fusion node 160 in lieu. In some embodiments, the function of the control node 170 can be implemented in the fusion node 160, i.e., it can be performed by the fusion node in lieu.

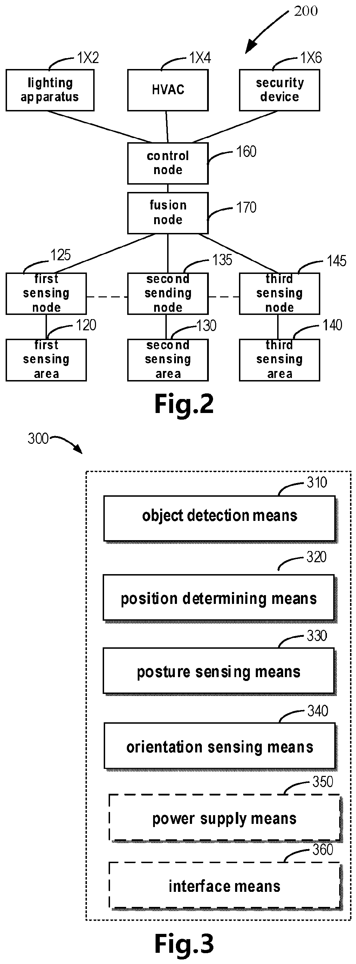

Fig. 2 illustrates a schematic block diagram of an intelligent building control system 200 in the application environment as depicted in Fig. 1. As shown therein, the intelligent building control system 200 may include a sensing network 210 and a control node 160. The sensing network 210 may include at least one sensing node 125, 135 and 145 and one or more fusion nodes 170 communicatively connected to the at least one sensing node. Each of the at least one sensing node is installed at a respective position of the building space and adapted to sense object detection data in a respective sensing area of the building space. The fusion node 170 is communicatively connected to each of the plurality of sensing nodes to acquire respective object detection data, and is configured to characterize the respective object detection data in the building space based on a location of each sensing node.

In the embodiments as depicted, for ease of description, the intelligent building control system 200 in Fig. 2 includes three sensing nodes 125, 135 and 145 which can be communicatively connected to one another as denoted by the dotted lines. In some embodiments, all of the sensing node 125, 135 and 145 can be communicatively connected to one another; in other embodiments, the sensing nodes 125, 135, 145 are partly communicatively connected. Each sensing node can form a respective sensing area. In the embodiments as depicted, the three sensing nodes 125, 135 and 145 form a first sensing area 120, a second sensing area 130 and a third sensing area 140 respectively. With the sensing nodes 125, 135 and 145 arranged in the building space, sensing areas can cover the important areas of the whole building. In the embodiments as depicted, one fusion node is shown. However, the number of the fusion nodes can be any other appropriate number.

The fusion node 170 in the sensing network 210 can be communicatively connected to the control node 160 and can provide the control node the object detection data characterized in the building space, such that the control node can implement control of the electrical apparatuses in the building space based on the object detection data and the spatial layout of the building space. It is to be understood that the fusion node 170 and the control node 160 are arranged separately in the embodiments as depicted, the fusion node 170 and the control node 160 can be integrated in a physical entity (for example, the fusion node 170 can be integrated with the function of the control node 160).

The control node 160 can be communicatively connected to the electrical apparatuses arranged in the building. In the embodiments as shown in Fig. 2, there are shown a plurality of lighting apparatuses 112, 122, 132, 142 and 152, a plurality of HVACs 114, 134, 144 and 154 and security devices. The lighting apparatuses can be used to, for example, provide light for the building. The HVACs can be used to, for example, provide ventilation, heating, air conditioning and the like within the building. The security devices may include, for example, a wide variety of security, firefighting, and alarm devices. In the embodiments as depicted, only three types of the devices as mentioned above are shown exemplarily. However, it is to be understood that this is provided merely as an example, and the electrical apparatuses may include other devices adapted to be arranged in the building to provide respective functions for the building.

The control node generates spatial state features of the building space associated with the object based on the characterized object detection data in the building space, and further provides information related to control of the respective electrical apparatuses in the building space based on the spatial state features.

As used herein, the term "spatial state features" refer to spatial states of a building space. The spatial state can relate to a spatial position, use and the like, of the building space, and can also relate to the electrical apparatuses in the space. The spatial state in a building space can include a relationship between the space and an object, whether a space is being occupied, whether a space is invaded abnormally, a number of objects in the space, a distribution density of objects in the space and the like. For instance, "a relationship between the space and an object" refers to an association of an attribute of a building space with a user. For example, the building space may be a room for resting, working or use, may be a corridor or aisle, or may be an electrical equipment room or the like. In some embodiments, the association with the object can be identified by identifying an attribute of the building space.

Fig. 3 illustrates a schematic structural block diagram of a sensing node according to some embodiments of the present disclosure. The sensing node 300 may include a housing and electrical device received within the housing. The sensing node 300 is implemented in a form of facilitating installation on a carrier of the building space, such as a wall, a celling or a support of the building, or other component arranged separately for allowing the sensing node to be installed.

The sensing node 300 may include a position determining means 320. The position determining means 320 is received within the housing and configured to provide positioning data of the sensing node in the building space. The position determining means can be implemented in multiple manners. In some embodiments, the position determining means may include a satellite-based positioning device such as Global Positioning System (GPS), BeiDou satellite positioning device, Galileo satellite positioning device and the like, where the satellite-based positioning device may be adapted to provide absolute position information of the sensing node. This is especially beneficial for the application scenario of outdoor buildings. In some embodiments, the position determining means 320 may include a relative positioning device such as a UWB (ultra-wideband) positioning device. In this case, positions of a plurality of sensing nodes can be determined, for example, through the respective relative positions provided by the plurality of sensing nodes. This is especially beneficial for the application scenario of insides of buildings. In some other embodiments, the position determining means 320 may include a combination of an absolute positioning device and a relative location positioning device. By means of the position determining means 320, positioning data of the sensing node 300 in the building space can be provided, thus making it possible to characterize data sensed by each sensing node in the entire building space.

The sensing node 300 may include an object detection means 310. The object detection means 310 can be received in the housing and configured to provide object detection data of an object in the sensing area. Upon the object entering the sensing area, the object detection means 310 can provide user tracing for the sensing area.

In some embodiments, the object detection means 310 may include image acquisition means that can analyze an acquired image to implement tracing of an object.

In some embodiments, the object detection means 310 may include an antenna array for transmitting a modulated electromagnetic wave signal and receiving a reflected signal reflected back from the object, so as to acquire object data about the object in the sensing area at predetermined timing. This is in particular suitable for situations within a building, where radar can implement object tracing at a low cost regardless of lighting conditions. In some embodiments, the electromagnetic signal transmitted by the radar is selected such that the sensing area is defined in relation to spatial obstacles in the space where the sensing node is located. In this way, it can cooperate with separators, for example, walls within the building space, to provide a proper sensing area. In this case, the object detection means may include a radar device with a short wavelength, such as a millimeter wave radar or laser radar. With the radar, the present disclosure can accomplish miniaturization of the object detection means which can be conveniently arranged within the building without causing any impact on the building.

In some embodiments, the electromagnetic signal transmitted by the radar is selected such that the sensing area is defined independently of spatial obstacles in the space where the sensing node is located. In many applications, it is desired that the radar wave can pass through spatial obstacles, such as walls, within the building space. In this case, the object detection means may include a radar device having a long wavelength, such as microwave radar.

The object detection means 310 according to embodiments of the present disclosure can determine an object event within the sensing area to provide object detection data. Depending on the type of the object detection means 310, the object event may include detecting whether an object is present, a number of objects or the like. In some embodiments, in the presence of an object, the object detection means 310 can provide data related to the object, such as a distance of the object relative to the sensing node, a movement direction of the object, a movement speed of the object, a body posture of the object and the like. The object detection data may be of various types. In some embodiments, only the object data related to the operation of the electrical apparatuses, rather than all of the object data, are provided.

In some embodiments, the object detection means 310 further includes a posture sensing means 330. Through the posture sensing means, an installed posture of the sensing node can be determined. In this case, the sensing node can provide object detection data more comprehensively. In particular, the object detection data are determined based at least partly on the posture data. In some embodiments, the posture sensing means may include an accelerator sensor, such as a 3-axis accelerator. With the posture sensing means, the present disclosure can conveniently determine information related to a movement change of the posture sensing means and further determine information of the traced object related to the movement change.

In some embodiments, the object detection means 310 further includes an orientation sensing means 340. With the orientation sensing means 340, the sensing node can provide object detection data more comprehensively. In particular, the object detection data are determined base at least partly or orientation data. In some embodiments, the orientation sensing means particularly includes an electronic compass. With the electronic compass, the present disclosure can conveniently determine orientation information of the orientation sensing means 340 and further determine information of the traced object related to the orientation.

In some embodiments, the sensing node 300 may further include a power supply means 350. In some embodiments, the power supply means 350 may include a transformer and can be adapted to draw power from the distribution system of the building. Through the power supply means 350, power can be conveniently supplied to the sensing node 300. In some embodiments, the power supply means 350 may include a battery device, which is in particular suitable for application scenarios where it is inconvenient to draw power from the building.

In some embodiments, the sensing node 300 may also include an interface means 360. With the interface means 360, connection and/or data interaction of the sensing node 300 with an external device can be achieved.

The sensing node 300 can transmit the sensed data to the fusion node. At the fusion node, data fusion is performed. In some embodiments, the sensing node 300 can perform preliminary processing for the sensed object detection data to reduce the data transmission amount. In some embodiments, the sensing node 300 can substitute for the fusion node to perform the data fusion function. This inevitably increases hardware costs of the sensing node 300.

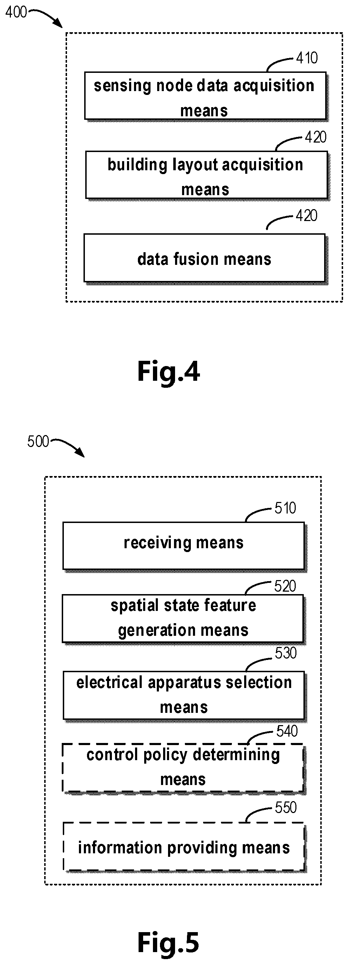

Fig. 4 illustrates a schematic structural block diagram of a fusion node 400 according to some embodiments of the present disclosure. The fusion node 400 may include any appropriate electronic device that has a data processing and communication capability and is communicatively connected to the sensing node 300. The fusion node 400 can be configured to acquire respective object detection data, and to characterize the respective object detection data in the building space based on a location of each sensing node.

As shown in Fig. 4, the fusion node 400 may include a sensing node data acquisition means 410 and a data fusion means 430.

The sensing node data acquisition means 410 is configured to receive data from the sensing node. The data from the sensing node may include data detection data sensed by the sensing node and positioning data indicating a location of the sensing node in the building.

The object detection data can indicate object tracing state information of a sensing node in a sensing area. In some embodiments, the object detection data may include object event information, for example, data related to objects, such as whether an object is present in the sensing area, a number of objects in the sensing area, a distance of an object in the sensing area relative to the sensing node, a movement direction of an object, a movement speed of an object, a body posture of an object and the like. The body posture may include, for example, a torso posture, a body posture and the like, of an object.

In some embodiments, the sensing node can perform preliminary processing for the object detection data to reduce the data transmission amount while lowering the network load. In this case, the data received at the sensing node data acquisition means 410 include data processed via the sensing node. In particular, the object detection data provided to the fusion node may include point cloud information acquired after preliminary processing of the detection object reflected signal; the point cloud information acquired at the fusion node is subjected to further processing to provide more practical object detection data (e.g., object detection data). In some embodiments, the sensing node may transmit the acquired data to the fusion node, without processing the object detection data. In this way, the costs at the sensing node can be reduced.

The positioning data can indicate location information of a sensing node in the building. In some embodiments, the location information may include relative position information of the sensing node in the building. In some embodiments, the location information may include absolute position information of the sensing node in the building. In some embodiments, the location information may include both the relative position information and the absolute position information of the sensing node in the building. In some embodiments, the positioning data may be acquired automatically by the position determining means disposed within the sensing node. As such, automatic configuration and determining of a location of a sensing node can be fulfilled. This is remarkably beneficial in this case where a plurality of sensing nodes are arranged. In some embodiments, the positioning data may be provided in advance. For example, the sensing node may be arranged at a predetermined location in the building according to the layout or design of the building. In this way, the positioning data of the sensing node can also be determined.

The data fusion means 430 can be configured to perform data fusion for data from a plurality of sensing nodes, to characterize respective object detection data in the building space based on a location of each sensing node. In some embodiments, the data fusion means 430 can be configured to perform coordinate conversion to convert sub-coordinate data of each sensing node into a world coordinate of the building. It is to be understood that world coordinates herein are used relative to the building, which may refer to relative position coordinates of the building, or may refer to absolute position coordinates of the building. In some embodiments, the sensing network may include a plurality of sensing nodes to cover areas of interest of the building. By means of the data fusion means, the data detection data acquired by those sensing nodes are converted into a world coordinate of the building. Therefore, it is possible that the intelligent building system performs control for electrical apparatuses within the building based on the layout of the whole building.

In some embodiments, the fusion node 400 may include a building spatial layout acquisition means 420. The building spatial layout acquisition means 420 can be configured to provide information on the spatial layout of the building. The spatial layout of the building may provide effective use space information and spatial obstacle information of the building. In some embodiments, the electrical apparatuses are installed in association with the spatial layout of the building. As such, control information for the electrical apparatuses can be provided based on the spatial layout of the building. In some application scenarios, a lighting system is taken as an example. For instance, when a certain sensing node senses that an object enters a respective sensing area, it can control lighting apparatuses in all or a part of activity areas related to the object in the building to be turned on (for example, the lighting apparatuses in all the corridors through which the object may walk). As such, even though no sensing node is provided in a corridor through which the object may walk, the lighting apparatuses can still be turned on to improve convenience for the user in use.

In some embodiments, the fusion node 400 may be implemented locally. In other embodiments, the fusion node 400 may be implemented in the cloud to efficiently use the cloud computing resources.

Fig. 5 illustrates a schematic structural block diagram of a control node 500 according to some embodiments of the present disclosure. The control node 500 may include: a receiving means 510 and a spatial state feature generation means 520. The receiving means 510 is configured to receive object detection data characterized in a building space from the sensing network, where the object detection data characterized in the building space are obtained by fusing the object detection data from a sensing node of the sensing network with the positioning data of the sensing node. The spatial state feature generation means 520 is configured to generate, based on the object detection data characterized in the building space, spatial space features of the building space associated with the object detection data. An electrical apparatus selecting means is configured to select, based on the spatial state features of the building space, electrical apparatuses associated with activities of an object from a plurality of electrical apparatuses.

The control node 500 can be communicatively connected to electrical apparatuses arranged in the building. After the control node 500 receives the fused data from the fusion node 400, the spatial state feature generation means 520 generates, based on the object detection data characterized in the building space, spatial state features of the building space associated with the object. Information related to the electrical apparatuses can be provided based on the spatial feature data.

In some embodiments, the control node 500 may include one or more of an electrical apparatus selecting means 530, a control policy determining means 540 and an information providing means 550. The electrical apparatus selecting means 530 can be configured to select, based on an object tracing condition of an area of interest characterized in a building space, electrical apparatuses associated from a plurality of electrical apparatuses. For ease of understanding, a lighting system is taken as an example. When a certain sensing node senses that an object enters a respective sensing area, the lighting system can select, based on spatial layout of the building, lighting apparatuses related to an activity area of the object from a plurality of lighting apparatus. For example, lighting apparatuses in all corridors through which the object may walk are all turned on, or lighting apparatuses in the working area where the object is located are turned on. The control policy device 540 can be configured to determine a respective control policy based on the selected electrical apparatuses. For instance, when the sensing node senses that an object leaves a sensing area, lighting apparatus in all space areas related to the object are all controlled to be turned off, for the sake of energy saving; when the sensing node senses that an object enters the sensing area, lighting apparatuses in all space areas related to the object are controlled to be turned off, for the sake of convenience. In some embodiments, the information providing means 550 can be used to provide information related to electrical apparatuses. For example, the information providing means 550 can transmit related information to a user or a control center of the electrical apparatuses. The control center can further control, based on the related information, electrical apparatus associated.

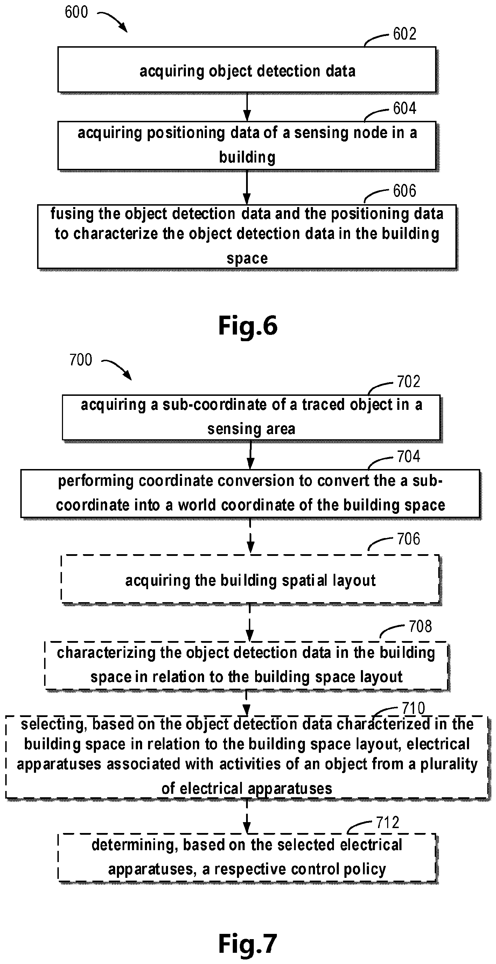

Fig. 6 illustrates a flowchart of a method of controlling electrical apparatuses according to some embodiments of the present disclosure. As shown therein, the method 600 for controlling electrical apparatuses may include: at 602, acquiring object detection data in a respective sensing area from a plurality of sensing nodes; at 604, acquiring positioning data of each of the plurality of sensing nodes in the building; at 606, performing data fusion for the object detection data and the positioning data to characterize the object detection data in the building space, so as to provide, based on the object detection data characterized in the building space, an instruction for controlling the electrical apparatuses. As the object detection data are characterized in the building space, the present disclosure can break through the limitation of the detection area of the sensing node while remarkably improving the intelligent control level of the electrical apparatuses.

In the method of controlling electrical apparatuses according to embodiments of the present disclosure, the electrical apparatuses are not directly controlled based on the signal of the sensor. Rather, the object detection data and the detection data from the sensing node are characterized in the building space, and information for control related to respective electrical apparatus in the building space is generated based on spatial state features of a building space. Since the object detection data are combined with the building space, the control method according to the present disclosure can perform intelligent control for electrical apparatuses based on a space of interest related to an object in the whole building.

In some embodiments, the object detection data include at least one of the following data related to objects in the sensing area: whether an object is present; a distance of an object relative to the sensing node; a number of objects; a movement direction of an object; a movement speed of an object; a body posture of an object. Correspondingly, a space state feature for controlling an operation of a node may include: an association of a space with an object, whether a space is being occupied, whether a space is abnormally intruded, a number of objects within a space, a distribution density of objects within a space, and the like. In some embodiments, the object detection data provided by the sensing node can include object data within a specific time window. In this case, the spatial state feature may include a space state feature within the specific time window. Based on the data related to those objects, a respective electrical apparatus control policy can be adopted.

In some embodiments, acquiring object detection data from a respective sensing area of a plurality of sensing nodes: using an antenna array to transmit a modulated electromagnetic wave signal and receiving a reflected signal reflected back from the object, to acquire object detection data about the object at predetermined timing in the sensing area. By using radar, the present disclosure can conveniently acquire the object detection data in a cost-effective manner. It is to be understood that this is provided only as an example. In other embodiments, image processing may also be used.

In some embodiments, the modulated electromagnetic wave is selected such that the sensing area is defined in relation to spatial obstacles in the space where the sensing node is located. In some embodiments, the object detection means includes one or more of a millimeter wave radar, an ultra-wideband radar and a laser radar. In this case, the present disclosure can achieve precise matching of a sensing area of a sensing node with a building layout.

In some embodiments, the modulated electromagnetic wave is selected such that the sensing area is defined independently of space obstacles in a space where the sensing node is located. In some embodiments, the object detection means includes a microwave radar. In this case, this is beneficial when the sensing area needs to break through the limitation of the space obstacles.

In some embodiments, acquiring object detection data from a respective sensing area of a plurality of sensing nodes further includes: acquiring posture data about the sensing nodes using a posture sensing means such that the object detection data can be determined based at least partly on the posture data. In some embodiments, the posture sensing means may include an accelerator sensor. By means of the posture data of the sensing nodes, the present disclosure can further enrich the content of the object detection data (for example, a movement change of an object can be determined based on positioning data of the sensing nodes).

In some embodiments, acquiring object detection data from a respective sensing area of a plurality of sensing nodes further includes: acquiring orientation data about the sensing nodes using an orientation sensing means such that the object detection data can be characterized in the building space based at least partly on the orientation data. In some embodiments, the orientation sensing means may include an electronic compass. By means of the orientation data of the sensing nodes, the present disclosure can further enrich the content of the object detection data (for example, orientation information of the object in the world coordinate system can be determined accurately based on the orientation data of the sensing nodes).

In some embodiments, acquiring object detection data from a respective sensing area of a plurality of sensing nodes further includes: acquiring location data of the sensing nodes in the building space using a position determining means, wherein the position determining means includes a satellite-based positioning device and an ultra-wideband positioning device, alone or in combination.

Fig. 7 illustrates a flowchart of a method 700 of controlling electronic apparatuses according to some embodiments of the present disclosure. Fusing object detection data with orientation data may be implemented in multiple ways. In the embodiments as shown in Fig. 7, in the method 700, a sub-coordinate of a traced object in a sensing area is acquired at 702. At 704, coordinate conversion is performed to convert a sub-coordinate into a world coordinate of a building space.

In some embodiments, the method 700 may include: at 706, a building space layout is acquired; at 708, the object detection data are characterized in a building space in relation to the building space layout.

In some embodiments, the method 700 may include: at 710, electrical apparatuses associated with activities of an object is selected from a plurality of electrical apparatuses based on the object detection data characterized in the building space in relation to the building space layout. At 712, a respective control policy is determined based on the selected electrical apparatuses.

Hereinafter, reference will be made to the environment of Fig. 1 to further describe in detail the method for controlling the electrical apparatuses according to embodiments of the present disclosure. Fig. 1 depicts a plurality of application scenarios for building intelligent control according to embodiments of the present disclosure.

As shown in Fig. 1, a person P1 appears at an elevator entrance and then enters the sensing area 120 in the vicinity of the elevator entrance, where the person P1 is sensed by the sensing node. At this time, the sensing node 125 transmits the object detection data of the person P1 appearing in the sensing area 120 to the fusion node 170. The fusion node 170 receives the object detection data and then fuses the same with the location of the sensing node 120 installed in the building, to characterize the object detection data in the building space. Those characterized data are further transmitted to the control node 160. The control node 160 selects, based on the characterized data, electrical apparatuses associated with activities of an object from a plurality of electrical apparatus. For example, the object P1 enters the area 110 along a path indicated by the arrow Q. The lighting apparatuses are taken as an example. In this case, the control node 160 selects, from a plurality of lighting apparatuses installed in the building space, lighting apparatuses 122a, 122b related to the path indicated by the arrow Q and the lighting apparatus 112 within the area 110, and transmits a turn-on instruction to those lighting apparatuses 122a, 122b, 112. In this way, even though the person P is not present in the respective area, the lighting apparatuses can be controlled to be turned on, for user's convenience in use.

Likewise, upon sensing that the person P1 leaves the sensing area 120, the sensing node 125 transmits, to the fusion node 170, the object detection data of the person P1 leaving the sensing area 120. The fusion node 170 receives the object detection data and then fuses the same with the location of the sensing node 125 installed in the building, to characterize the object detection data in the building space. The characterized data are further transmitted to the control node 160. The control node 160 selects, based on the characterized data, electrical apparatuses associated with activities of an object from the plurality of electrical apparatuses. Lighting apparatuses are taken as an example. The control node 160 selects, from a plurality of lighting apparatuses installed in the building space, lighting apparatuses 122a, 122b related to the object departure and the lighting apparatus 112 within the area 110, and sends a turn-off instruction to those lighting apparatuses 122a, 122b, 122. In this way, the electrical apparatuses in the area related to the object can be turned off conveniently, to fulfil the purpose of energy saving.

The sensing area 130 illustrates another application scenario. As shown in Fig. 1, the sensing area 130 may include a plurality of persons P2. The number of persons P2 in the sensing area 130 can be transmitted as object detection data to the fusion node 170. The fusion node 170 receives the object detection data and then fuses the same with the location of the sensing node 135 installed in the building, to characterize the object detection data in the building. The characterized data are then transmitted to the control node 160. The control node 160 selects, based on the characterized data, electrical apparatuses associated with activities of an object from a plurality of electrical apparatuses.

HVACs are taken as an example. In this case, the control node 160 selects HVACs 134 related to the object P2 from a plurality of HVACs in the building space, and transmits a regulation instruction to the HVACs 134. For instance, an appropriate value can be set based on an occupancy rate of persons P2 in the sensing area 130. For example, in this case that there is a large number of the objects P2, it can be chosen to operate the HVACs 134 with greater power, for example, to provide more intensive ventilation, so as to improve the user comfort; In this case that there is a small number of the objects P2, it can be chosen to operate the HVACs 134 with less power, so as to reduce energy waste. In addition, in the same scenario, it is assumed that the area 150 is also an area where the objects P2 are frequently active. In this case, even though no sensing node is provided in the area 150, the electrical apparatuses in the area 150 can still be controlled. For example, the control node 160 can select, from a plurality of electrical apparatuses installed in the building space, a HVAC 154 and a lighting apparatus 152 related to the objects P2, and sends a corresponding control instruction to the HVAC 154 and lighting apparatus 152. For example, when there is a great number of the objects P2, it can be chosen to operate the HVAC 154 with less power, for example, to avoid energy waste; at the same time, the lighting apparatus 152 is turned on to provide light for user's convenience.

The sensing area 140 illustrates a further application scenario. As shown in Fig. 1, the sensing area 140 may include a person P3. The sensing node 145 can be configured to detect a body posture of the person P3 such as a torso posture, leg posture and/or hand gesture. The object detection data can be used to control appropriate electrical apparatuses in the building space. For example, the body posture of the person P3 in the sensing are 140 can be used as object detection data to be transmitted to the fusion node 170. The fusion node 170 receives the object detection data and fuses the same with the location of the sensing node 145 installed in the building, to characterize the object detection data in the building space. The characterized data are further transmitted to the control node 160. The control node 160 selects, based on the characterized data, electrical apparatuses associated with activities of an object from a plurality of electrical apparatuses.

For example, the object detection data indicates that the person P3 is lying down in a resting posture. In this case, the HVAC 144 can be selected to operate with less power, for example, to provide less intensive ventilation, so as to improve the user comfort. Moreover, in the same scenario, it is assumed that the area 150 is also an area where the object P3 is frequently active. In this case, even though no sensing node is provided in the area 150, the electrical apparatuses in the area 150 can still be controlled. For example, the control node 160 can select, from a plurality of electrical apparatuses installed in the building space, a HVAC 154 and a lighting apparatus 152 related to the object P3, and transmits a corresponding control instruction to the HVAC 154 and the lighting apparatus 152. For instance, when the P3 is lying down in a resting posture, the HVAC 154 and the lighting apparatus 152 may be turned off to save energy.

Although the application examples according to embodiments of the present disclosure are illustrated using the lighting apparatuses and the HVACs in Fig. 1, the intelligent building control system according to embodiments of the present disclosure can also be applied to other electrical apparatuses for security, firefighting and the like. In addition, although the application examples according to embodiments of the present disclosure are illustrated using a floor of a building as an example in the drawings, the intelligent building control system according to embodiments of the present application can be applied to the whole building (including an indoor or outdoor circumstance). In addition, the example method described above is provided merely exemplarily to make the present invention clear to those skilled in the art. The intelligent building control system according to the present disclosure can be implemented in any other appropriate manner.

According to embodiments of the present disclosure, there is further provided an electronic device and a computer readable storage medium.

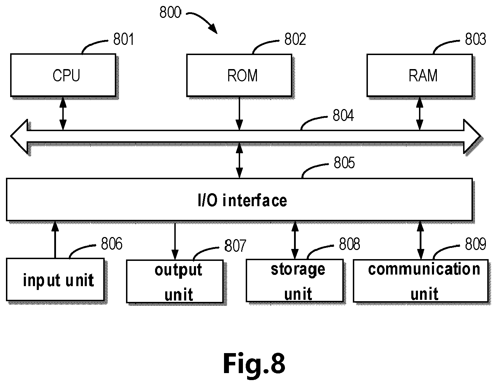

Fig. 8 illustrates a block diagram of an electronic device for implementing a method of vehicle navigation according to embodiments of the present discourse. The electronic device is targeted to represent a digital computer in various forms such as a laptop, a desktop, a workstation, a personal digital assistant, a server, a blade server, a large-scale computer and other suitable computer. The electronic device may also represent a mobile device in various forms such as a personal digital processor, a cellular phone, a smart phone, a wearable device and other similar computing device. The components, the connections and relations and the functions thereof as shown therein are provided merely as examples, without any intention to limit the implementations of the present disclosure within the description and/or requirements as provided herein.

Fig. 8 is a schematic block diagram of a computing apparatus 800 that can implement a plurality of embodiments of the present disclosure. As shown therein, the apparatus 800 includes a central processing unit (CPU) 801 which performs various appropriate acts and processing, based on computer program instructions stored in a read-only memory (ROM) 802 or computer program instructions loaded from a storage unit 808 to a random access memory (RAM) 803. The RAM 803 stores therein various programs and data required for operations of the apparatus 800. The CPU 801, the ROM 802 and the RAM 803 are connected via a bus 804 with one another. An input/output (I/O) interface 805 is also connected to the bus 804.

The following components in the apparatus 800 are connected to the I/O interface 805: an input unit 806 such as a keyboard, a mouse and the like; an output unit 807 including various kinds of displays and a loudspeaker, etc.; a storage unit 808 including a magnetic disk, an optical disk, and etc.; a communication unit 809 including a network card, a modem, and a wireless communication transceiver, etc. The communication unit 809 allows the apparatus 800 to exchange information/data with other devices through a computer network such as the Internet and/or various kinds of telecommunications networks.

Various processes and processing described above, e.g., the processes 600, 700, may be executed by the processing unit 801. For example, in some embodiments, the processes 600, 700 can be implemented as a computer software program that is tangibly included in a machine readable medium, e.g., the storage unit 808. In some embodiments, part or all of the computer programs may be loaded and/or mounted onto the device 800 via ROM 802 and/or communication unit 809. When the computer program is loaded to the RAM 803 and executed by the CPU 801, one or more steps of the processes 600, 700 as described above may be executed. Alternatively, in other embodiments, the CPU 801 can be configured in any other appropriate manner (e.g., by means of firmware) to perform the processes 600, 700.

The functionalities as described above herein can be performed at least partly by one or more hardware logic components. For example, without limitations, example hardware logic components may be used, including: Programmable Gate Array (FPGA), Application Specific Integrated Circuit (ASIC), Application Specific Standard Product (ASSP), System on Chip (SOC), Load Programmable Logic Device (CPLD) and the like.

The program codes for implementing the method according to the present disclosure may be written in any combination of one or more programming languages. Those program codes can be provided to a processor or controller of a general purpose computer, a special purpose of computer or other programmable data processing device such that the program codes, when executed by the processor or controller, can cause the functions/operations specified in the flowchart and/or block diagram to be implemented. The program codes can be executed fully or partly on a machine, or can be executed, as a stand-alone package, partly on a machine and partly on a remote machine or executed fully on a remote machine or server.

The computer readable storage medium may be a tangible device that can have or store programs for use by an instruction execution system, device or apparatus, for use by an instruction execution system, device or apparatus in combination. The machine readable storage medium may be a machine readable signal medium or machine readable storage medium. The machine readable medium may include, but is not limited to, an electronic, a magnetic, an optical, an electromagnetic, an infrared or a semiconductor system, device or apparatus, or any suitable combination thereof. More specific examples of the machine readable storage medium may include a portable computer disk, a hard disk, a random access memory (RAM), a read-only memory (ROM), an erasable programmable read-only memory (EPROM or Flash memory), an optical fiber, a portable compact disc read-only memory (CD-ROM), an optical storage device or a magnetic storage device, which is based on one or more wired electrical connections, or any suitable combination thereof.

In addition, although respective operations are depicted in a specific order, it should be read as requiring that those operations be executed in the specific order as shown or sequentially in an order, or all of the operations as shown be executed to achieve a desired result. In a certain environment, multitasking and parallel processing may be advantageous. Likewise, although the above discussion covers details of some implementations, it should not be construed as limitations to the scope of the present disclosure. Some features described in a context of an individual embodiment may be implemented in combination in an implementation. To the contrary, various features described in a context of a single implementation can also be implemented in multiple implementations separately or in any suitable sub-combination.

Although the subject matter has been described above using languages specific to structural features and/or logic acts of the method, it would be appreciated that the subject matter defined in the appended claims is not necessarily confined to the specific features or acts described above. Instead, the specific features and acts described above are only an example form of implementing the claims.

## Claims

1. A sensing node, comprising:
a housing adapted to be installed on a carrier of a building space;
an object detection means received in the housing and configured to provide object detection data of objects in a sensing area; and
a position determining means received in the housing and configured to provide positioning data of the sensing node in the building space;
wherein the object detection data are adapted to be fused with the positioning data to provide characterized data, the characterized data providing a characterization of the object detection data in the building space.

2. The sensing node of claim 1, wherein the object detection data comprises at least one of the following data related to the objects in the sensing area:
whether an object is present;
a distance of an object relative to the sensing node;
a number of objects;
a movement direction of an object;
a movement speed of an object; and
a body posture of an object.

3. The sensing node of claim 1 or 2, wherein the object detection means comprises an antenna array for transmitting a modulated electromagnetic wave signal and receiving a reflected signal reflected back from the objects to acquire object data of the objects in the sensing area at predetermined timing.

4. The sensing node of claim 3, wherein the modulated electromagnetic wave signal is selected such that the sensing area is defined in relation to spatial obstacles in a space where the sensing node is located, and in particular, the object detection means includes one or more of a millimeter-wave radar, an ultra-wideband radar and a laser radar.

5. The sensing node of claim 3, wherein the modulated electromagnetic signal is selected such that the sensing area is defined independently of spatial obstacles in a space where the sensing node is located, and in particular, the object detection means includes a microwave radar.

6. The sensing node of any one of claim 1-5, wherein the object detection means further comprises a posture sensing means for providing posture data about the sensing node such that the object detection data can be determined based at least partly on the posture data, and in particular, the posture sensing means comprises an accelerator sensor.

7. The sensing node of claim 3, wherein the object detection means further comprises an orientation sensing means for providing orientation data about the sensing node such that the object detection data can be **characterized in** the building space based at least partly on the orientation data, and in particular, the object detection means comprises an electronic compass.

8. The sensing node of any one of claims 1-7, further comprising a position determining means for determining location data of the sensing node in the building space.

9. The sensing node of claim 8, wherein the position determining means comprises a satellite-based positioning device, an ultra-wideband positioning device or their combination.

10. The sensing node of any one of claims 1-7 and 9, wherein the sensing node is configured to acquire a sub-coordinate of a traced object in the sensing area, to perform coordinate conversion to convert the sub-coordinate into a world coordinate of the building space.

11. A sensing network, comprising:
at least one the sensing node of any one of claims 1-10, each sensing node in the plurality of sensing nodes being installed at a respective location of a building space and adapted to sense object detection data in a respective sensing area of the building space; and
a fusion node communicatively connected to each sensing node in the plurality of sensing nodes to acquire the respective object detection data, and configured to represent, based on a location of each sensing node, the respective object detection data in the building space.

12. The sensing network of claim 11, wherein the fusion node is configured to provide a control node with the object detection data **characterized in** the building space, such that the control node generates, based on the object detection data **characterized in** the building space, spatial state features of the building space associated with the objects, to provide, based on the spatial state features, information related to respective electrical apparatuses in the building space.

13. The sensing network of claim 11 or 12, wherein the sensing node is configured to acquire a sub-coordinate of a traced object in the sensing area; and the fusion node comprises a coordinate conversion device configured to perform coordinate conversion to convert the sub-coordinate into a world coordinate of the building space.

14. The sensing network of any one of claims 11-13, wherein the fusion node comprises a building space layout acquisition means configured to acquire the building space layout, and wherein the fusion node is configured to characterize the object detection data in the building space in relation to the building space layout.

15. The sensing network of any one of claims 11-13, further comprising a control node communicatively connected to the fusion node and comprising an electrical apparatus selecting means, and wherein the electrical apparatus selecting means is configured to select, based on the object detection data **characterized in** the building space in relation to the building space layout, electrical apparatuses for control associated with activities of the object from a plurality of electrical apparatuses.

16. The sensing network of claim 15, wherein the control node further comprises a control policy determining means configured to determine a respective control policy based on the selected electrical apparatuses.

17. A control node, comprising:
a receiving means configured to receive object detection data **characterized in** a building space from a sensing network, wherein the object detection data **characterized in** the building space is acquired by fusing object detection data from a sensing node of the sensing network and positioning data of the sensing node;
a spatial state feature generation means configured to generate, based on the object detection data **characterized in** the building space, spatial state features of the building space associated with an object; and
an electrical apparatus selection means configured to select, based on the spatial state features of the building space, electrical apparatuses for control associated with activities of the object from a plurality of electrical apparatuses.

18. The control node of claim 17, further comprising:
an information providing means configured to provide information related to the selected electrical apparatuses.

19. The control node of claim 17 or 18, further comprising:
a control policy determining means configured to determine a respective control policy based on the selected electrical apparatuses.

20. A method of controlling electrical apparatuses, comprising:
acquiring object detection data from a respective sensing area of a plurality of sensing nodes of any one of claims 1-10;
acquiring positioning data of each of the plurality of sensing nodes in the building; and
fusing the object detection data and the positioning data to characterize the object detection data in the building space, to provide, based on the object detection data **characterized in** the building space, control information related to the electrical apparatuses.

21. The method of claim 20, wherein fusing the object detection data and the positioning data comprises:
acquiring a sub-coordinate of a traced object in the sensing area; and
performing coordinate conversion to convert the sub-coordinate into a world coordinate of the building space.

22. The method of claim 20 or 21, further comprising:
acquiring a building spatial layout; and
characterizing the object detection data in the building space in relation to the building spatial layout.

23. The method of any one of claims 20 to 22, further comprising:
generating, based on the object detection data **characterized in** the building space, spatial state features of the building space associated with the object.

24. The method of claim 23, wherein the spatial state features comprise at least one of the following data:
a relationship of the space with respect to the object;
whether the space is being occupied;
whether the space is abnormally intruded;
a number of objects within the space; and
a distribution density of objects within the space.

25. The method of claim 22, further comprising:
selecting, based on the object detection data **characterized in** the building space in relation to the building space, electrical apparatuses for control associated with activities of the object from a plurality of electrical apparatuses.

26. The method of claim 25, further comprising: providing, based on the selected electrical apparatuses, information related to control thereof.

27. An electrical apparatus, comprising:
at least one processor; and
a memory communicatively connected to the at least one processor;
wherein the memory stores instructions that can be executed by the at least one processor, the instructions, when executed by the at least one processor, causing the at least one processor to perform the method of any one of claims 20-26.

28. An intelligent building control system, comprising:
the sensing network of any one of claims 11-16; and
the electrical apparatus of claim 27.

29. An intelligent building control system, comprising:
the sensing node of any one of claims 11-16; and
the control node of any one of claims 17-19.

30. A non-transient computer readable storage medium having computer instructions stored thereon, wherein the computer instructions are executed to cause a computer to perform the method of any one of claims 20-26.
